# DEMANDE DE BREVET EUROPEEN

(11) **EP 3 504 998 A1**
(43) Date de publication de la demande: **03.07.2019**
(21) Numéro de dépôt: 18211408.2
(22) Date de dépôt: 10.12.2018
(51) Int. Cl.: A43B 13/00, B29D 35/00, B29D 35/12

(54) **MOULE HYBRIDE DE SEMELLE DE CHAUSSURE**

(30) Priorité: 27.12.2017 FR 1771435
(71) Demandeur: COMPAGNIE GENERALE DES ETABLISSEMENTS MICHELIN, 63000 Clermont-Ferrand (FR)
(72) Inventeur: SOUYRI, Philippe, 63430 Clermont-Ferrand Cedex 9 (FR)
(74) Mandataire: Bauvir, Jacques

(57) **Abrégé**

Moule hybride (1) pour semelle de chaussure, ledit moule comprenant un corps (7) procurant une surface (3) de moulage et au moins un insert (2) de moulage, l'insert (2) de moulage étant réalisé selon un premier procédé et la surface de moulage (3) étant réalisée selon un second procédé distinct du premier.

## Description

### DOMAINE TECHNIQUE DE L'INVENTION

La présente invention concerne un moule hybride de semelle de chaussure.

### ETAT DE LA TECHNIQUE ANTERIEURE

Depuis quelques années, des semelles de chaussures de formes et couleurs de plus en plus variées apparaissent sur le marché. Certaines formes très originales sont purement destinées à produire un effet visuel attractif ou valorisant pour le produit. D'autres formes sont pré vues pour produire un ou plusieurs effets techniques, comme par exemple un effet d'amortissement, de confort, d'adhérence ou sol, de protection, etc.

Poursuivant dans cette même optique de grande diversité et originalité, les fabricants de semelles ont récemment intégré certains nouveaux procédés de fabrication permettant de mettre en oeuvre des produits encore plus décalés.

Par exemple, le document KR20140146737 décrit un procédé de fabrication d'une semelle de chaussure sur mesure comprenant une étape d'obtention des données 3D de la semelle intérieure au moyen d'une photo d'une semelle d'un client avec un moyen de mesure 3D, une étape de modification des données 3D de la semelle pour former les données de la semelle de chaussure sur mesure, une étape d'achèvement de la semelle faite sur mesure en transmettant les données à l'imprimante 3D.

Cette solution est relation lourde et coûteuse à mettre en oeuvre et ne présente un intérêt que pour des produits spécifiques produits à exemplaires uniques ou en très faibles quantités.

Le document CN204426864 décrit un procédé de fabrication de chaussures de sport facile à assemblée et à séparer. Les différentes semelles sont créées au moyen d'une imprimante 3D.

Le document CN104959597 décrit un procédé de fabrication de semelles de chaussures à l'aide d'une imprimante 3D.

Ces différents exemples utilisant l'impression 3D utilisent des solutions coûteuses à très faible productivité, ne permettant pas de produire des semelles à grande échelle dans des conditions avantageuse.

Le document US20070063368 décrit un moule pour chaussure constitué de plusieurs parties, dont une partie réalisée en structure métallique pleine, et une autre partie en structure métallique cellulaire, prévue pour faciliter la ventilation lors du moulage. La partie cellulaire est mise en oeuvre par moulage à l'aide de particules de mousse. Ce type de moule est relativement complexe et coûteux mais ne permet pas pour autant de réaliser des formes complexes au niveau de la semelle moulée.

Il existe donc un besoin pour créer et produire des semelles de chaussures originales, mais à des coûts attractifs pour d'importants volumes de production.

### EXPOSE DE L'INVENTION

Tout d'abord, un premier objet de l'invention consiste à prévoir un moyen pour permettre de créer et fabriquer des semelles de formes originales et innovantes, à des coûts attractifs.

Un autre objet de l'invention consiste à prévoir un moyen permettant de créer et fabriquer des semelles pourvues de formes ou motifs nouveaux.

Encore un autre objet de l'invention consiste à prévoir un élément de moule offrant une grande souplesse dans l'agencement de textures.

Un autre objet de l'invention consiste à prévoir un élément de moule pourvu de textures très fines et/ou complexes réalisées de façon optimale.

Pour ce faire, l'invention prévoit un moule hybride pour semelle de chaussure, ledit moule comprenant un corps procurant une surface de moulage et au moins un insert de moulage, l'insert de moulage étant réalisé selon un premier procédé et la surface de moulage étant réalisée selon un second procédé distinct du premier, l'insert de moulage étant réalisé avec un procédé de fabrication par addition de matière, de préférence métallique.

Une telle architecture d'élément de moule permet d'optimiser la fabrication des inserts servant de support aux textures pour ainsi pouvoir réaliser des textures très fines et/ou complexes à l'aide d'un procédé de fabrication spécifiquement adapté à cette exigence. Cette architecture permet d'agencer une quasi infinité de textures sur un corps principal simple à réaliser et peu coûteux. Le procédé de fabrication par addition de matière métallique est par exemple un procédé impliquant une fusion sélective par laser.

Les caractéristiques des textures sont adaptées en fonction des pneumatiques à produire.

Selon un exemple de réalisation, la surface de moulage est réalisée selon un procédé sans addition de matière.

Ce mode de fabrication est particulièrement adapté à la mise en forme d'éléments de textures de très petites dimensions et/ou de formes complexes. Le corps principal est avantageusement mis en oeuvre par un procédé classique, comme par exemple par emboutissage. Ce mode de fabrication est simple à mettre en oeuvre et permet de réaliser des pièces de faible épaisseur avec une grande fiabilité, à des coûts particulièrement avantageux. Chacun des composants de l'ensemble est ainsi optimisé, tant du point de vu des coûts que des caractéristiques mécaniques requises.

Selon un mode de réalisation avantageux, l'insert comporte une pluralité de textures. Les caractéristiques des textures sont adaptées en fonction des semelles à produire.

Selon un exemple de réalisation, les textures de l'insert sont obtenues par gravure laser.

Dans un exemple de réalisation, les textures de l'insert comprennent une pluralité d'éléments en creux ou en protubérance venus de matière avec ledit insert.

Selon un mode de réalisation avantageux, des moyens de solidarisation de la première zone avec le corps principal du moule sont réalisés par collage, ou soudure, ou clipsage ou vissage ou serrage.

Selon encore un mode de réalisation avantageux, l'insert comporte une pluralité de formes moulantes complexes pour sculptures de semelles.

De multiples variantes de réalisation de ces formes complexes sont possibles. Par exemple, au moins une forme moulante complexe comprend un plan principal non parallèpidédique. Selon un autre exemple, au moins une forme moulante complexe comprend un plan principal avec une zone bombée. Selon encore un autre exemple, au moins une forme moulante complexe comprend un plan principal en forme de S ou de Y allongé. Encore un exemple, selon lequel au moins une forme moulante complexe comprend un plan principal et une pluralité de plans secondaires sensiblement perpendiculaires.

### DESCRIPTION DES FIGURES

Tous les détails de réalisation sont donnés dans la description qui suit, complétée par les figures 1 à 16 présentées uniquement à des fins d'exemples non limitatifs, et dans lesquelles:
- les figures 1A et 1B sont des vues en coupe d'exemples de moules hybrides selon l'invention ;
- les figures 2 et 3 sont des exemples de semelles de chaussures fabriquées au moyen d'un moule hybride selon l'invention ;
- les figures 4a à 16 illustrent des exemples de formes moulantes pour sculptures de semelles complexes.

### DESCRIPTION DETAILLEE DE L'INVENTION

Par « texture », on entend un agencement organisé d'une pluralité d'éléments (stries, trous, brins, lames), tout ou partie de ces éléments étant la répétition d'un même élément de base, le motif présent sur le moule permettant d'obtenir une texture particulière sur un pneumatique.

Pas « forme moulante complexe pour sculpture de semelle », on entend une forme réalisable par fusion sélective par laser, qui permet de mouler un profil de sculpture de semelle dont la forme est non planaire.

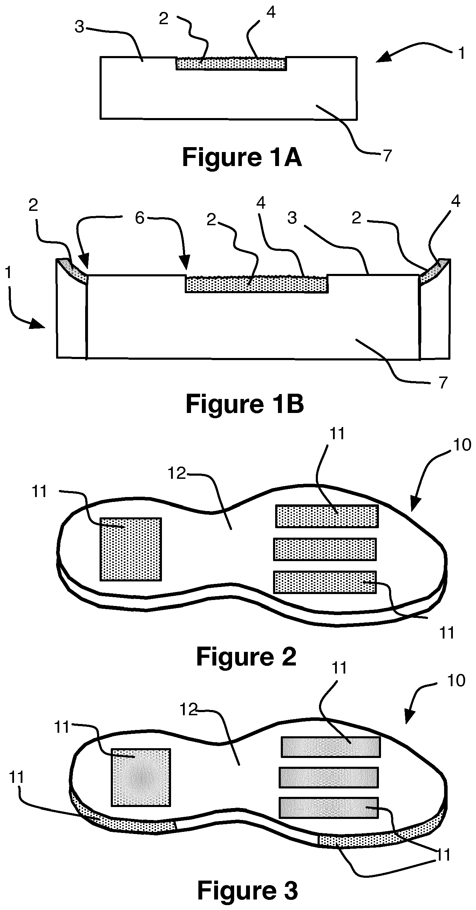

Les figures 1A et 1B illustrent des exemples de moules hybrides 1 pour semelle de chaussure selon l'invention. Le corps 7 du moule comprend une surface 3 de moulage et au moins un insert 2 de moulage.

L'insert 2 de moulage est réalisé selon un procédé impliquant une fusion sélective par laser.

La surface de moulage 3, en préférentiellement la masse de matière adjacente dans laquelle la surface de moulage est apprêtée est réalisée selon un second procédé distinct du premier, par exemple par usinage, étampage, etc.

Tel qu'illustré dans les exemples des figures 1A et 1B, l'insert est pourvu de textures 4. Ces textures sont obtenues par exemple par gravure laser ou par addition de matière.

Les figures 2 et 3 sont représentations schématiques en perspective d'exemples de semelles 10 susceptibles d'être moulées à l'aide d'un moule hybride tel que préalablement décrit. On observe les textures 11 générées par le moule dans différentes zones spécifiquement choisies sur la semelle. Les semelles comportent une alternance de zones texturées 11 et de zones non texturées 12. Cette configuration originale est due au fait que le moule hybride comporte lui-même sur surface pourvue d'une alternance avec des inserts texturés 4 et des surfaces 3 sans textures.

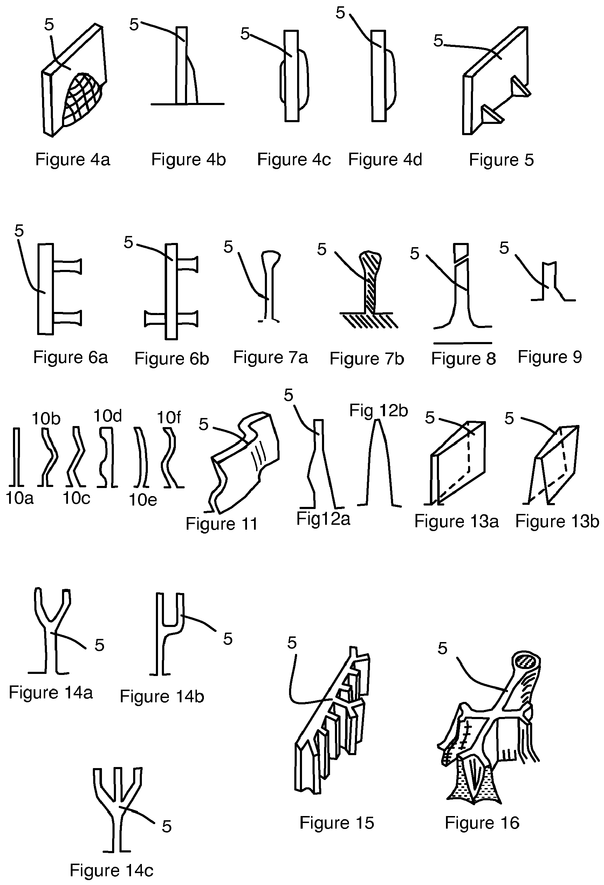

Les figures 4a à 16 illustrent des exemples de réalisation de portions d'insert pourvues de formes moulantes complexes 5 pour sculptures de semelles.

Les figures 4a, 4b, 4c et 5 présentent des exemples de lamelles pourvues d'un plan principal sensiblement rectangulaire avec un bossage sur un ou deux côtés du plan principal. Les figures 4a et 4b sont des vues en élévation, tandis que les 4c et 4d sont des vues de dessus. Lorsque deux bossages sont présents, ceux-ci peuvent être symétriques ou non. La section des bossages peut suivre un profil déterminé, par exemple selon une loi mathématique.

Les figures 5, 6a et 6b montrent des exemples où le plan principal sensiblement rectangulaire est complété par une pluralité de plans secondaires sensiblement perpendiculaires, de dimensions sensiblement inférieures au plan principal. La figure 5 est une vue de côté tandis que les figures 6a et 6b sont des vues de dessus. L'exemple de la figure 6a présente des saillies d'un côté et celui de la figure 6b dispose de saillies sur ses deux côtés.

Les exemples des figures 7a et 7b sont des vues de côté où le plan principal est complété par une tête dont l'épaisseur est supérieure à celle du reste de la lamelle. Les figures 8 et 9 illustrent des exemples où les plans principaux sont pourvus de raccords pour éviter les zones de concentration de contraintes.

La figure 10a montre une vue de côté d'un plan principal droit (en référence). Les figures 10b à 10f illustrent des exemples de plans principaux de formes quelconques, non droite (ou non planaire), par exemple en forme de S, de Z, incurvé, etc. La figure 11 illustre un exemple de réalisation en forme de S allongé. Les figures 12a et 12b montrent des exemples en vue de côté, avec des épaisseurs variables le long du profil vertical.

Les figures 13a et 13b montrent des exemples en vue de côté, avec des épaisseurs variables le long de la direction longitudinale, figure 13a et le long des directions longitudinales et verticales, figure 13b.

Les figures 14a et 14b illustrent un exemple de réalisation en forme de Y allongé. La figure 14c illustre un exemple de réalisation en forme de fourche allongée.

Les figures 15 et 16 illustrent des exemples de combinaisons de formes complexes sélectionnées par exemple parmi les formes préalablement décrites et illustrées. A la figure 15, de profils en Y et rectilignes sont combinés. A la figure 16, trois profils en forme de Y sont montés en opposition et complétés par un profil rectiligne surmonté d'une tête élargie.

Tous les exemples précédents (figure 4a à 16) sont avantageusement réalisés avec une fabrication par addition de matière.

### Numéros de référence employés sur les figures

- 1: Moule hybride
- 2: Insert
- 3: Surface de moulage
- 4: Textures
- 5: forme moulante complexe pour sculpture de semelle
- 6: Moyens de solidarisation
- 7: Corps du moule
- 10: Semelle
- 11: Texture obtenue après moulage
- 12: Surface de semelle non texturée

## Revendications

1. Moule hybride (1) pour semelle de chaussure, ledit moule comprenant un corps (7) procurant une surface (3) de moulage et au moins un insert (2) de moulage, l'insert (2) de moulage étant réalisé selon un premier procédé et la surface de moulage (3) étant réalisée selon un second procédé distinct du premier, **caractérisé en ce que** l'insert (2) de moulage est réalisé avec un procédé de fabrication par addition de matière, de préférence métallique.

2. Moule hybride (1) selon la revendication 1, **caractérisé en ce que** la surface de moulage (3) est réalisée selon un procédé sans addition de matière.

3. Moule hybride (1) selon l'une des revendications 1 ou 2, **caractérisé en ce que** l'insert (2) comporte une pluralité de textures (4).

4. Moule hybride (1) selon la revendication 3, **caractérisé en ce que** les textures (4) de l'insert sont obtenues par gravure laser.

5. Moule hybride (1) selon l'une quelconque des revendications précédentes, **caractérisé en ce que** des moyens de solidarisation (6) de l'insert (2) avec le corps (7) principal du moule sont réalisés par collage, ou soudure, ou clipsage ou vissage ou serrage.

6. Moule hybride (1) selon l'une des revendications 1 ou 2, **caractérisé en ce que** l'insert (2) de moulage comporte une pluralité de formes moulantes complexes (5) pour sculptures de semelles.

7. Moule hybride selon la revendication 6, dans lequel au moins une forme moulante complexe comprend un plan principal non parallèpidédique.

8. Moule hybride selon l'une quelconque des revendications 6 ou 7, dans lequel au moins une forme moulante complexe comprend un plan principal avec une zone bombée.

9. Moule hybride selon l'une quelconque des revendications 6 à 8, dans lequel au moins une forme moulante complexe comprend un plan principal en forme de S ou de Y allongé.

10. Moule hybride selon l'une quelconque des revendications 6 à 8, dans lequel au moins une forme moulante complexe comprend un plan principal et une pluralité de plans secondaires sensiblement perpendiculaires.
